# EUROPEAN PATENT SPECIFICATION

(11) **EP 2 635 130 B1**
(45) Date of publication and mention of the grant of the patent: **09.01.2019**
(21) Application number: 11838852.9
(22) Date of filing: 04.11.2011
(51) Int. Cl.: A23G 3/20, A23L 29/238

(54) **COMPOSITION OF PURIFIED SOLUBLE MANNANS FOR DIETARY SUPPLEMENTS AND METHODS OF USE THEREOF**
ZUSAMMENSETZUNG AUS GEREINIGTEN LÖSLICHEN MANNANEN FÜR NAHRUNGSERGÄNZUNGSMITTEL UND VERWENDUNGSVERFAHREN DAFÜR
COMPOSITION DE MANNANES SOLUBLES PURIFIÉS POUR COMPLÉMENTS ALIMENTAIRES ET LEURS PROCÉDÉS D'UTILISATION

(30) Priority: 05.11.2010 US 410609 P
(43) Date of publication of application: 11.09.2013
(73) Proprietor: Boston Therapeutics, Inc., Manchester, New Hampshire 03101 (US)
(72) Inventor: ZOMER, Eliezer, Newton Massachusetts 02458 (US); PLATT, David, Newton Massachusetts 02459 (US)
(74) Representative: Adam, Holger
(86) International application number: PCT/US2011/059271
(87) International publication number: WO 2012/061675

(56) References cited:
- WO-A1-2004/113390
- WO-A1-2009/136219
- US-A- 3 973 008
- US-A- 6 048 563
- US-A- 6 063 402
- US-A1- 2004 009 247
- US-A1- 2007 098 763
- US-A1- 2007 098 763
- US-B1- 6 485 945
- US-B1- 6 733 769

## Description

### CROSS REFERENCES TO RELATED APPLICATIONS

This application claims the benefit of U.S. Provisional Patent Application Serial No. 61/410,609, filed on November 5, 2010.

### FIELD OF INVENTION

The present disclosure relates to the field of compositions of purified polysaccharides. More specifically, the present disclosure relates to extraction and purification of compositions for reducing the carbohydrate glycemic index of food and moderating blood glucose elevations.

### BACKGROUND of INVENTION

Legumes' fiber has attracted considerable interest as a natural source of soluble dietary fiber. The legumes contain a central hard, yellow embryo surrounded by a corneous and comparatively large layer of white, semitransparent endosperm. This endosperm contains a polysaccharide with a mannan backbone that contains mainly galactose side chains. The endosperm is surrounded by a tenacious, dark brown husk. The color of the gum fraction depends upon the amount of outer husk (brown color) and cotyledon (yellow color) present.

Unfortunately, commercially available flour of various legumes may have unwanted natural chemicals, flavors, and odors. Additionally they are of high viscosity and cannot be used for dietary supplements in a required clinically effective dosage. They also may contain a quantity of saponins of steroidal structures which may have toxic activities, including effecting fertility similar to steroid hormones effective as oral contraceptives. Saponins and alkaloids are known to cause a variety of toxicities when consumed in excess quantities. In order to produce a dietary supplement with a high effective load of soluble mannan polysaccharide fiber these saponins, other alkaloids and unwanted proteinous lipids, and other unpleasant components need to be removed to make a product suitable as a functional dietary supplement.

Nutrition research conducted in the 1970's showed that different carbohydrates did not have the same effects on blood glucose (sugar) levels after eating. These findings challenged the general assumption that all complex carbohydrates (starches) produce lower blood glucose responses than simple sugars, and questioned the clinical significance of carbohydrate exchange lists that have regulated the diets of people with diabetes for over three decades. These exchange lists are based on the assumption that portions of different foods containing equal amounts of carbohydrate will produce the same blood glucose response. Consequently, the glycemic index (GI) method was developed in order to rank equal carbohydrate portions of different foods according to the extent to which they increase blood glucose levels after being eaten. Foods with a high GI value (≥ 70) contain rapidly digested carbohydrate, which produces a large rapid rise and fall in the level of blood glucose. In contrast, foods with a low GI value (≤ 55) contain slowly digested carbohydrate, which produces a gradual, relatively low rise in the level of blood glucose.

Over two decades of research has confirmed that a food's effect on blood glucose levels can not be accurately predicted on the basis of the type and amount of carbohydrate it contains. This is because the rate at which carbohydrate is digested and released into the bloodstream is influenced by many food factors, such as the food's physical form, its fat, protein and fiber content, and the chemical structure of its carbohydrate. For these reasons, apparently similar foods within the same food group can produce widely different blood glucose responses. Therefore, it's necessary to measure the GI values of foods on an individual basis.

GI research has important implications for the food industry and people's health. Scientists now agree that the terms 'complex carbohydrate' and 'sugars', which commonly appear on food labels, have little nutritional or physiological significance. Recently, a committee of experts was brought together by the Food and Agriculture Organization of the United Nations (FAO) and the World Health Organization (WHO) to review the available research evidence regarding the importance of carbohydrates in human nutrition and health. The committee endorsed the use of the GI method for classifying carbohydrate-rich foods and recommended that GI values of foods be used in conjunction with information about food composition to guide food choices. Currently, GI values are being used to construct dietary plans for people with diabetes, and are being used in scientific research, which is examining the association between the glycemic impact of diets and the risk of certain diseases.

Document US 3,973,008 discloses water-soluble konjac mannan capable of undergoing gelation when heated in an aqueous alkaline solution. It is obtained by extracting the ground tuber of the konjac plant with water, separating insoluble matter, dialyzing the solids-free liquid against water and then lyophilizing the dialyzed liquid to remove water. The konjac mannan extract is described to be useful for alleviating constipation and reducing weight.

Document US 6,733,769 B1 discloses methods for producing low viscosity glucomannan compositions by mixing a viscosity lowering compound with glucomannan under conditions suitable to form a low viscosity glucomannan composition. Further described is the ability to modulate (increase or decrease) viscosity by combining glucomannan with compounds of differing molecular weights, as well as methods for lowering blood glucose and cholesterol in mammals by administering an effective therapeutic amount of a maltodextrin-glucomannan complex.

Over the last decade, a growing body of research has shown that the overall glycemic impact of people's diets can influence the development of insulin resistance and the risk of associated diseases (heart disease, diabetes), independently of the total carbohydrate content of the diet. To date, the available evidence suggests that diets based on low-GI carbohydrate-rich foods improve insulin sensitivity and blood glucose control in people with diabetes; reduce high blood fat levels; and may help prolong peak physical performance during endurance events. In addition, low-GI foods tend to be less refined and relatively filling and are therefore useful for weight control diets. Given that non-insulin-dependent diabetes (NIDDM) and coronary heart disease continue to be major causes of illness and death in all industrialized countries, the extent to which the glycemic impact of people's diets influences both the onset and progression of these diseases is an issue of great importance. Therefore, further research is required to determine the GI values of a greater range of carbohydrate-rich foods and to examine the effects of different processing methods. GI values of new foods and ingredients can be determined before they are released into the marketplace and their GI value can be stated on the food's nutrition panel to assist consumers in their efforts to lower the glycemic impact of their diet.

To date, few studies have measured postprandial blood glucose and insulin responses concurrently. This is due to the expensive cost of measuring insulin levels in blood samples and also reflects the widespread belief that glycemia is the only relevant postprandial factor to consider in the dietary therapy of people with diabetes mellitus. However, available research indicates that postprandial insulin responses to some foods are disproportionately greater than their blood glucose responses. A growing body of research results from dietary trials and large epidemiological studies indicates that the long-term consumption of a diet with a high glycemic load that induces recurring and high blood glucose and insulin levels is associated with an increased risk of developing insulin resistance, non-insulin-dependent diabetes mellitus, dyslipidemia, and cardiovascular disease. It may be possible to show a more direct link between diet and the risk of certain chronic diseases if a large database of the insulin index values of common foods was available.

Although dietary carbohydrate is a major stimulus for insulin secretion, other food factors such as certain amino and fatty acids also enhance insulin secretion. Foods rich in protein, but low in carbohydrate, such as meat or fish, induce relatively high levels of insulin secretion compared to their low blood glucose responses. In addition, foods rich in refined carbohydrate and fat, such as chocolate and certain bakery products, can produce insulin responses that are much greater than their postprandial glycemic responses. Recently, best-selling diet books in the USA have popularized the concept that carbohydrate-rich foods that trigger high insulin responses are particularly fattening. Unfortunately, the authors do not always correctly identify low- or high-insulinemic foods.

### SUMMARY of INVENTION

This disclosure is directed to compositions of purified mannan polysaccharides or mannan polysaccharide fibers from various legumes and methods of use thereof. The purified and homogenous size hypoallergenic fiber composed of over 50% mannose monosaccharide unit is useful in providing a single high dosage dietary supplement. This dietary supplement can be used to reduce the carbohydrate glycemic index of food and moderate blood glucose elevations by controlling sugar digestion and absorbance to the circulation.

The invention is limited to the subject-matter of the claims.

In an illustrative embodiment, a composition of chemically purified soluble mannan polysaccharide fibers from legumes' seeds that include but are not limited to *Ceratonia siliqua, Ccesalpinia spinosa Trigonelle foenum-graecum,* and *Cyamopsis tetragonolobus,* and their use in the assembly of palatable dietary supplements is disclosed herein. A fractionation process provides high-quality physiologically soluble, chemically modified and purified homogeneous size mannan polysaccharide fibers, devoid of natural impurities, including proteins, alkaloids (soap-like foaming chemicals), glycoalkaloids (for example, sapogenins), environmental impurities such as heavy metals, agricultural residues, and microbial toxins.

In an illustrative embodiment, the purification process includes at least three phases of purification. The first phase of this process, according to the disclosure, starts with blending powdered legumes seeds to a semi-liquid mixture at conditions that solubilize and extract proteins and pigments from the semi-liquid mixture. The first phase may combine alkaline pH solution, baking soda, triphosphate, detergent, and/or mixtures thereof with the powdered legumes seeds. The alkaline processing can use any food grade or pharmaceutical grade alkaline solution including, but not limited to, sodium hydroxide (NaOH), potassium hydroxide (KOH), sodium bicarbonate (NaHCO₃), sodium carbonate (Na₂CO₃), and/or Triammonium base at about a 0.01 to about a 1 molar concentration. The ratio of alkaline to legumes' seed powder can range from about 1:2 to about 1:100 on a molar ratio basis.

In a second phase of the process, according to the disclsorue, the semi-liquid mixture is diluted in acid and heated at a selected temperature for a selected period of time to solubilize minerals and to achieve partial hydrolysis of proteins and starch like polysaccharides. The acid diluents can be any food grade or pharmaceutical grade acids including, but not limited to, HCl, Citrate, Acetate, Sulfate, or mixtures thereof at concentrations of up to about 2 molars and a pH lower than about pH 4.0. Temperature and exposure time can range from about room temperature to boiling for periods of about 30 minutes to about 48 hours. The ratio of acid to the alkaline mixture may range from about 1:2 to about 1:20 on a molar ratio basis.

In a third phase of the process, according to the disclosure, the diluted semi-liquid mixture is mixed with a solvent for a period of contact time at a selected temperature in order to cause selected lipophilic compounds, including alkaloids; microbial endotoxins, for example lipopolysaccharides; mycotoxins, for example aflatoxins; as well as peptides, oligosaccharides and monosaccharides to solubilize and absorb into the solvent.

In an illustrative embodiment, the solvent concentration is adjusted to a selected concentration, where the legumes' seed mannan polysaccharide fibers are recovered as a precipitate out of the solvent phase. The sequential treatments produce a spent solvent that contains contaminant residues including fragmented proteins, solubilized starch like carbohydrates, pigments, alkaloids, and other seed lipophilic impurities components, while yielding a precipitate of purified mannan polysaccharide fibers.

The third phase of the process may include mixing the acidified mixture of legumes' seed with solvent in the range of about 1:2 to about 1:20 on a weight-to-weight basis (wt/wt). The solvent may be any food or pharmaceutical grade polar alcohol or ketone. In an illustrative embodiment, the solvent is about 95% ethanol (wt/wt) and the period of mixing time is in the range of about 30 to about 600 minutes. The temperature of the mixture during the contact time is in the range of about 5 to about 80 degrees Celsius. This step may be repeated by re-suspension in buffered solvent for improved recovery of fiber with high purity.

A fourth phase of the process, according to the disclosure, involves the separation of the extracted mannan polysaccharides or fibers from the solvent. In one illustrative embodiment, this is accomplished by centrifugation or filtration followed by vacuum drying. However, it should be appreciated that the separation can also be accomplished by other industrial process, for example rotary evaporation. In an illustrative embodiment, this phase may include washing with a polar alcohol at a concentration in the range of about 20% to about 95% ethanol (wt/wt). The final drying process may include agitation, vacuum, agglomeration and sieving. In this drying step, the mannan polysaccharide fiber is processed through vacuum, granulation and sieving to obtain powder ready for the manufacturing of dietary supplement in a pharmaceutical delivery packaging or medicament such as chewable tablet, caplets, gel-caps, succulents, and/or a concentrated liquid-gel format.

The overall industrial process could be conducted in sequential or continuous feeding modes. The process as described may include additives to improve extraction of impurities, for example, the addition of a food grade or pharmaceutical grade sulfiting agent to the solvent, for example, sulfur dioxide gas and one or more of salts of sulfite, bisulfite and metabisulfite, or hydrogen peroxide in the range of about 0.01% to about 0.4% (wt/wt).

In an illustrative embodiment, a composition, for example in the form of a tablet, is disclosed. The composition may comprise, consist, or consist essentially of at least one purified soluble mannan polysaccharide of high molecular weight and at least one purified mannan polysaccharide of low molecular weight. The composition may comprise, consist, or consist essentially of at least one purified soluble mannan polysaccharide of high molecular weight, at least one purified mannan polysaccharide of low molecular weight, and at least one oligosaccharide or/and monosaccharide. The composition may comprise, consist, or consist essentially of 1 to 25% (wt/wt) of the at least one first purified soluble mannan polysaccharide of high molecular weight, 20 to 80% (wt/wt) of the at least one second purified mannan polysaccharide of low molecular weight, and 40 to 60% (wt/wt) of the at least one oligosaccharide and/or monosaccharide.

### BRIEF DESCRIPTION OF THE DRAWINGS

The compositions, systems, processes, and methods disclosed herein are illustrated in the figures of the accompanying drawings which are meant to be exemplary and not limiting, in which like references are intended to refer to like or corresponding parts, and in which:
Fig. 1 illustrates a block flow diagram of an embodiment of a method for recovering purified mannan polysaccharides;
Fig. 2 illustrates a chemical structure of a mannan polysaccharide;
Fig. 3 illustrates a block flow diagram of an embodiment of a method for recovering high molecular weight (HMW) purified mannan polysaccharides;
Fig. 4 illustrates a block flow diagram of an embodiment of a method for recovering low molecular weight (LMW) purified mannan polysaccharides;
Fig. 5 illustrates graphical comparison of a subjects blood glucose levels;
Fig. 6 illustrates a table of subject details;
Fig. 7 illustrates a table of the weight and macronutrient content of the test portions of the three rice test meals;
Fig. 8 illustrates a table of the order of presentation of the test meals;
Figs. 9 and 10 illustrate tables of the subjects' individual blood glucose concentrations for RICE test meals;
Figs. 11 and 12 illustrate tables of the subjects' individual blood glucose concentrations for RICE + 3 mannan tablets test meals;
Figs. 13 and 14 illustrate tables of the subjects' individual blood glucose concentrations for RICE + 6 mannan tablets test meals;
Fig. 15 illustrates a table of plasma glucose concentrations for blood samples (mmol/L) collected during test sessions for the three test meals;
Figs. 16 and 17 illustrate tables of the subjects' individual plasma insulin results for the RICE test meals;
Figs. 18 and 19 illustrate tables of the subjects' individual plasma insulin results for the RICE + 3 mannan tablets test meals;
Figs. 20 and 21 illustrate tables of the subjects' individual plasma insulin results for the RICE + 6 mannan tablets test meals;
Fig. 22 illustrates a table of plasma insulin results for blood samples (pmol/L) collected during test sessions for the three test meals;
Fig. 23 illustrates a table of heavy metal test results for a tablet containing about 2 grams of purified mannan polysaccharide(s);
Fig. 24 illustrates a graph of cytotoxicity test results of purified mannan polysaccharide(s); and
Fig. 25 illustrates a table of microbial toxin test results of purified mannan polysaccharide(s).

### DETAILED DESCRIPTION

Detailed embodiments of compositions, systems, processes, and methods are disclosed herein, however, it is to be understood that the disclosed embodiments are merely exemplary of the compositions, systems, processes, and methods disclosed herein, which may be embodied in various forms. Therefore, specific functional details disclosed herein are not to be interpreted as limiting, but merely as a basis for the claims and as a representative basis for teaching one skilled in the art to variously employ the present compositions, systems, processes, and methods disclosed herein.

In an illustrative embodiment, methods of extraction, purification and compositions of mannan polysaccharides dietary fibers (also referred to herein as "mannan polysaccharides" or "mannan polysaccharides fibers") from legumes, such as but not limited to commercial or commercially grown legumes are disclosed herein. The purified and homogenous size hypoallergenic fiber(s) is useful in providing a single high dosage dietary supplement important to achieving overall health benefits. For example, a high mannan dosage is effective in supporting glycemic health, and maintaining normal blood sugar levels as well as lowering of cholesterol in blood. The high mannan dosage is a pro-biotic nutrient that supports the growth of beneficial bacteria and the maintenance of beneficial intestinal flora for colonic and intestinal health. The high mannan dosage also is effective in promoting a healthy digestive system and the absorption of essential nutrients.

In an illustrative embodiment, legume seeds are fractionated and the fractionated mannan polysaccharide(s) or fiber(s) is purified to generate a diversity of molecular weight polysaccharides. Various feasible processing methods and processes are disclosed to maximize yields and soluble fiber that can be incorporated into a soluble supplement composition that can deliver oral therapeutically effective doses of mannan polysaccharide fiber. The fractionation process may be conducted in either a sequential batch or continuous feeding mode.

In an illustrative embodiment, the extraction of pure soluble mannan polysaccharide fiber with a predetermined molecular weight is accomplished by treating the extracted legume seed material with acid at a constant pH and temperature for a period of selected contact time; and fractionating fibers in various concentrations of solvent, such as, but not limited to, ethanol. The solvent, for example ethanol, can be used in a concentration of between about 25% to about 65% on a weight-to-weight basis (wt/wt). However, it should be appreciated within the scope of the disclosure that other solvents may be used.

The solvent concentration is adjusted to a selected concentration, where the legumes' seed mannan polysaccharide fibers are recovered as a precipitate out of the solvent phase. Following precipitation, the fibers are placed in a solvent, washed, and dried. In an illustrative embodiment, collection of the precipitate is accomplished by centrifugation or filtration, and the washing of the fiber with an ethanolic acid mixture. Further, the washing step may be carried out a second or a number of additional times to improve the purity of the final product.

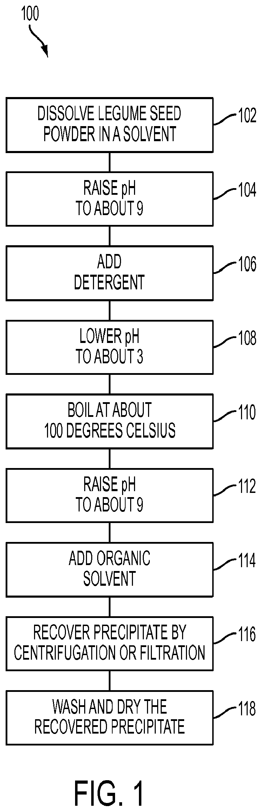

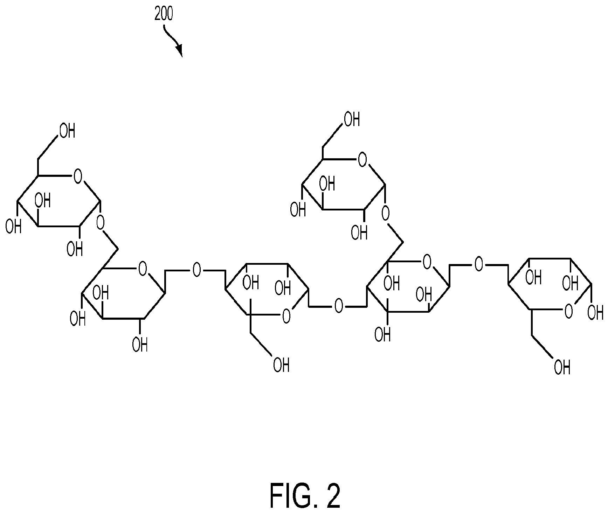

A process or method 100 for recovering one or more purified mannan polysaccharide fibers according to an illustrative embodiment is described with reference to Fig. 1. In this illustrative embodiment, the purified mannan polysaccharide fiber 200, illustrated in Fig. 2, is recovered or extracted from legume seed powder, such as but not limited to *Cassia fistula, Ceratonia siliqua, Cæsalpinia spinosa Trigonelle foenum-graecum,* and/or *Cyamopsis tetragonolobus.* The legume seed powder may be a commercially available powder of food grade or pharmaceutical grade. However, it should be appreciated that any pharmaceutically and/or nutritionally acceptable form of legume seed is suitable for use in the processes and methods disclosed herein. The extraction of the mannan polysaccharide fiber(s) may also be accomplished using raw seed by making powder or flakes from the raw seed, for example using common industrial methods and equipment.

In an illustrative embodiment, the process may be divided into phases. The first phase may include blending or dissolving the legumes seed powder in a first solvent to a semi-liquid mixture at conditions that solubilize and extract proteins and pigments from the semi-liquid mixture. This first phase may include combining alkaline pH solution, baking soda, triphosphate, detergent, and/or mixtures thereof with the legumes seed powder. The alkaline processing can use any pharmaceutically and/or nutritionally acceptable form of alkaline solution including, but not limited to, sodium hydroxide (NaOH), potassium hydroxide (KOH), sodium bicarbonate (NaHCO₃), sodium carbonate (Na₂CO₃), Na₂CO₂, and/or Triammonium base at about 0.01 to 1 molar concentration. The ratio of alkaline to legumes' seed powder can range from about 1:2 to about 1:100 (wt/wt), inclusive of all ranges and sub-ranges in between. In an illustrative embodiment, the extraction process may require an agitator or a high power agitator due to the high viscosity of the semi-liquid mixture.

As illustrated in Fig. 1, the first phase includes dissolving the legume seed powder in a solvent, for example water, purified water, and/or distilled water, illustrated as 102. The ratio of the legume seed powder to the solvent may be in the range of about 1:10 to about 1:100 on a weight-to-volume basis (wt/v), inclusive of all ranges and sub-ranges in between. In this illustrative embodiment, the ratio of the legume seed powder to the solvent is about 1:15 (wt/v). The temperature for the extraction process may be in the range of about 25 to about 95 degrees Celsius, inclusive of all ranges and sub-ranges in between. In this illustrative embodiment, the initial temperature for the extraction is about 80 to about 95 degrees Celsius. However, through solubilization the temperature may drop to room temperature. The contact period may be in the range of about 2 to 24 hours, inclusive of all ranges and sub-ranges in between. In this illustrative embodiment, the contact period is about 4 hours.

At the end of the solubilization period the pH of the solvent is raised to about 9.0, for example, by adding sodium hydroxide and/or potassium hydroxide to the semi-liquid mixture, illustrated as 104. A mild natural detergent, including but not limited to sodium dodecyl sulfate may also be added to the semi-liquid mixture, illustrated as 106, to improve solubilization of proteins and lypophilic substances. This extraction step may last for a period of about 30 to about 60 minutes and be conducted at a temperature of about 37 degrees Celsius or less. It should be appreciated that various water alkaline and detergent mixtures, temperatures, contact times, and legume seed powder to solvent ratios may be used without departing from the scope and intent of this disclosure and that such substitution is contemplated within the scope of the present disclosure.

In a second phase of the process, the semi-liquid mixture may be diluted in acid and heated at a selected temperature for a selected period to solubilize minerals and to achieve at least partial hydrolysis of proteins and starch like polysaccharides. The acid diluents can be any pharmaceutically and/or nutritionally acceptable form of acid including, but not limited to, hydrochloric acid (HCl), Citrate, Acetate, and/or Sulfate at a concentration of up to about 2 molars and a pH lower than about 4.0. The ratio of acid to the alkaline semi-liquid mixture may range from about 1:2 to about 1:20 on a molar ratio basis, inclusive of all ranges and sub-ranges in between. The temperature and exposure time may range from about room temperature to boiling for periods of about 30 minutes to about 48 hours, inclusive of all ranges and sub-ranges in between. As illustrated in Fig. 1, the second phase includes acidifying the resulting semi-liquid mixture to a pH of about 3, illustrated as 108, and boiling the semi-liquid mixture at about 100 degrees Celsius for about 2 to about 5 hours, illustrated as 110.

After the semi-liquid mixture has been diluted and heated, the pH of the diluted mixture may optionally be adjusted back to a pH of about 9, illustrated as 112.

In a third phase of the process, the diluted mixture may be mixed with a solvent for a period of contact time at a selected temperature to solubilize and absorb certain lipophilic compounds, such as, but not limited to, alkaloids; microbial endotoxins, such as lipopolysaccharides; mycotoxins, such as aflatoxins; as well as peptides, oligosaccharides and monosaccharides into the solvent. In an illustrative embodiment, the third phase of the process includes mixing the acidified mixture of legumes' seed with solvent in the range of about 1:2 to about 1:20 (wt/wt), inclusive of all ranges and sub-ranges in between. The solvent may be any pharmaceutically and/or nutritionally acceptable form of solvent including, but not limited to, polar alcohols and/or ketones. In one illustrative embodiment the solvent is about 95% ethanol (wt/wt) and the period of mixing time is in the range of about 30 to about 600 minutes, inclusive of all ranges and sub-ranges in between. The temperature of the mixture during the contact time is in the range of about 5 to about 80 degrees Celsius, inclusive of all ranges and sub-ranges in between.

As illustrated in Fig. 1, the third phase includes adding an organic solvent, such as, but not limited to, ethanol to the mixture in about a 50% solvent concentration (wt/wt), illustrated as 114. In an illustrative embodiment, the solvent concentration is adjusted to a selected concentration, where the legumes' seed mannan polysaccharide fibers are recovered as a precipitate out of the solvent phase. This produces a spent solvent that contains contaminant residues including fragmented proteins, solubilized starch like carbohydrates, pigments, alkaloids, and other seed lipophilic impurity components, while yielding a precipitate of purified mannan polysaccharide fibers. In an illustrative embodiment, the third phase may be repeated one or more times, for example up to five times, by re-suspending the recovered fiber in buffered solvent for improved recovery of fiber with high purity.

In a fourth phase, the precipitated mannan polysaccharide fiber is extracted from the solvent by centrifugation or filtration followed by vacuum drying. However, it should be appreciated within the scope of the disclosure that extraction of the mannan polysaccharide fiber from the solvent can be accomplished by other industrial process, including rotary evaporation.

As illustrated in Fig. 1, the mannan polysaccharide fiber precipitates and is harvested or recovered by centrifugation or filtration, illustrated as 116. In this illustrative embodiment, the liquid filtrate contains protein, amino acids, oligo and monosaccharides, lipids, alkaloids, saponins, pigments, minerals and other impurities including breakdown organic derivatives. The solid fraction is about 90% (wt/wt) or greater pure mannan polysaccharide fiber, which at this point, may be re-extracted one or more times with a fresh quantity of solvent in order to maximize purity and recovery.

In an illustrative embodiment, the recovered mannan polysaccharide fiber may then be washed one or more times and dried, illustrated as 118. The recovered mannan polysaccharide fiber may be washed with a polar alcohol at a concentration in the range of about 20% to about 95% ethanol (wt/wt). The recovered mannan polysaccharide fiber may be dried by processing the recovered mannan polysaccharide fiber through vacuum, granulation, and sieving to obtain a powder. However, it should be appreciated that the recovered mannan polysaccharide fiber be dried by a number of different drying processes including, but not limited to, agglomeration, sieving, oven drying, agitation drying, fluid bed drying, freeze drying, and vacuum drying.

In this illustrative embodiment, vacuum drying is used. The dried mannan polysaccharide fibers contain about 90% (wt/wt) or greater of pure mannan polysaccharide fiber, which is white to off-white in appearance, odorless, tasteless and soluble in water. The purified mannan polysaccharide fiber powder may then be used for the manufacturing of dietary supplement in a pharmaceutical dosage form or medicament such as, but not limited to, a chewable tablet, caplets, gel-caps, succulents, and/or a concentrated liquid-gel format.

In an illustrative embodiment, the purified mannan polysaccharide fiber or polysaccharide powder is milled to about 50 to about 200 mesh powder and tested for water content. Based on the water content, further drying may be necessary for long stability and safe storage at room temperature.

While the extraction process described above is presented as a sequential batch process, it should be appreciated that a continuous mode such as a counter-current extraction mode of two or more stages, as is a common practice in the industry, may be used. The overall industrial process could be conducted in a sequential or a continuous feeding mode. The process may also incorporate additional additives to improve extraction of impurities, such as but not limited to the addition of a pharmaceutically and/or nutritionally acceptable sulfiting agent to the solvent, such as, but not limited to, sulfur dioxide gas and one or more salts of sulfite, bisulfite and metabisulfite, and/or hydrogen peroxide in the range of about 0.01% to about 0.4% (wt/wt).

In an illustrative embodiment, the final molecular weight of the mannan polysaccharide(s) may be controlled. The final molecular weight of mannan polysaccharide(s) is controlled at two steps, the time of boiling at pH of about 3 and fractionation of the final pure fiber in about 25%, about 45% and/or about 65% (wt/wt) ethanol in water. The lower concentrations of ethanol precipitate high molecular weight (HMW) fibers, for example about 60 kD to about 300 kD. The higher concentrations of ethanol precipitate low molecular weight (LMW) fibers, for example about 5 kD to about 40 kD. Further, the time of boiling or heating at high temperature is longer for producing LMW fibers. Conversely, the time of boiling or heating at high temperature is shorter for producing HMW fibers.

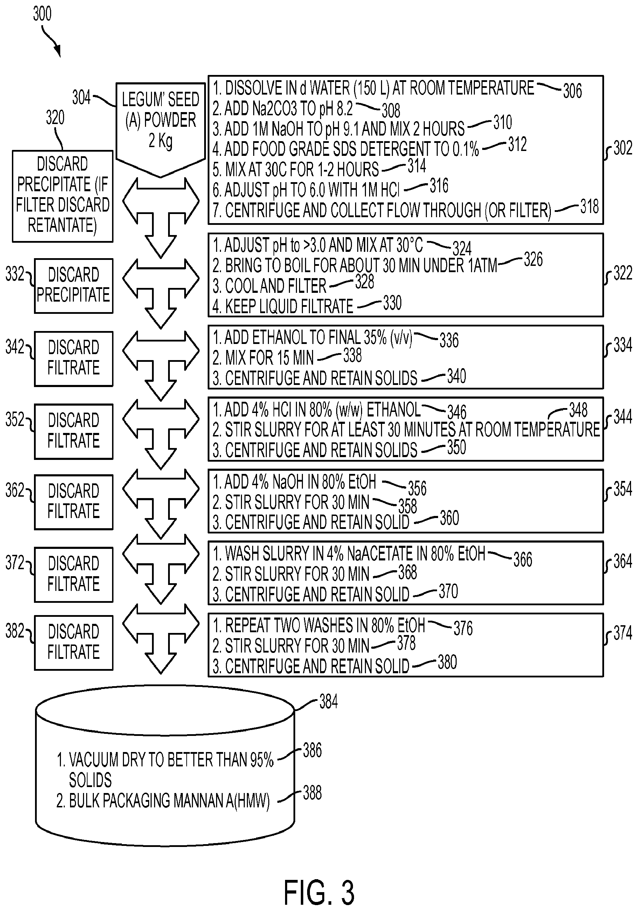

A process or method 300 for recovering one or more high molecular weight (HMW) purified mannan polysaccharide fibers according to an illustrative embodiment is disclosed with reference to Fig. 3. In this illustrative embodiment, the purified mannan polysaccharide fiber(s) is recovered or extracted from legume seed powder, for example *Cassia fistula.* As illustrated in Fig. 3, a first phase 302 of the process includes dissolving about 2 kilograms (kg) of legume seed powder 304 in about 150 liters of water at room temperature, illustrated as step 306. After the legume seed powder 304 is dissolved in the water, the pH of the mixture is raised to about 8.2 by adding a sufficient amount of sodium carbonate (Na₂CO₃), illustrated as step 308. The pH of the mixture may be raised further to about 9.1 by adding a sufficient amount of one molar sodium hydroxide (NaOH) and mixing the mixture for about 2 hours, illustrated as step 308.

A mild natural detergent, including, but not limited to, sodium dodecyl sulfate (SDS) may also be added to the mixture, illustrated as step 312, to improve the solubilization of proteins and lypophilic substances. The mixture may then be mixed at about 30 degrees Celsius for about 1 to about 2 hours, illustrated as step 314. After mixing the mixture, the pH may be lowered to about 6.0 by adding a sufficient amount of hydrochloric acid (HCl), illustrated as step 316. The mixture may then be processed through centrifugation and the liquid filtrate or flow through may be collected, illustrated as step 318. The precipitate collected can be discarded, illustrated as step 320.

In a second phase 322 of the process, the collected liquid filtrate is diluted in acid to a pH of about 3.0 and mixed at about 30 degrees Celsius, illustrated as step 324. The acidified mixture may then be heated and boiled for about 30 minutes at about 1 atm, illustrated as step 326, to solubilize minerals and to achieve at least partial hydrolysis of proteins and starch like polysaccharides. The acid diluents can be any pharmaceutically and/or nutritionally acceptable form of acid including, but not limited to, hydrochloric acid (HCl), Citrate, Acetate, and/or Sulfate at a concentration of up to about 2 molars and a pH lower than about 4.0. After heating, the acidified mixture may be cooled and filtered, illustrated as step 328. The liquid filtrate or flow through may be collected, illustrated as step 330. The precipitate collected can be discarded, illustrated as step 332.

In a third phase 334 of the process, ethanol may be added to the collected liquid filtrate in about a 35% on a volume-to-volume basis (v/v), illustrated as step 336. The resulting mixture may then be mixed for about 15 minutes, illustrated as step 338. After mixing, the mixture may be filtered or processed through centrifugation and the precipitate collected may be retained, illustrated as step 340. The liquid filtrate or flow through may be discarded, illustrated as step 342.

In a fourth phase 344 of the process, about 4% hydrochloric acid (HCl) in about 80% ethanol (wt/wt) may be added to the collected precipitate, illustrated as step 346. The resulting mixture may then be stirred for at least about 30 minutes at room temperature, illustrated as step 348. After stirring, the mixture may be filtered or processed through centrifugation and the precipitate collected may be retained, illustrated as step 350. The liquid filtrate or flow through may be discarded, illustrated as step 352.

In a fifth phase 354 of the process, about 4% sodium hydroxide (NaOH) in about 80% ethanol (wt/wt) may be added to the collected precipitate, illustrated as step 356. The resulting mixture may then be stirred for about 30 minutes, illustrated as step 358. After stirring, the mixture may be filtered or processed through centrifugation and the precipitate collected may be retained, illustrated as step 360. The liquid filtrate or flow through may be discarded, illustrated as step 362.

In a sixth phase 364 of the process, the collected precipitate may be washed with about 4% sodium acetate in about 80% ethanol (wt/wt), illustrated as step 366. The resulting mixture may then be stirred for about 30 minutes, illustrated as step 368. After stirring, the mixture may be filtered or processed through centrifugation and the precipitate collected may be retained, illustrated as step 370. The liquid filtrate or flow through may be discarded, illustrated as step 372.

In a seventh phase 374 of the process, the collected precipitate may be washed about two additional times in about 80% ethanol (wt/wt), illustrated as step 376. The resulting mixture may then be stirred for about 30 minutes, illustrated as step 378. After stirring, the mixture may be filtered or processed through centrifugation and the precipitate collected may be retained, illustrated as step 380. The liquid filtrate or flow through may be discarded, illustrated as step 382.

In an eighth phase 384 of the process, the collected precipitate may be dried by processing the collected precipitate through vacuum, granulation, and sieving to obtain a powder of better than about 95% solids (wt/wt), illustrated as step 386. The dried powder contains about 90% (wt/wt) or greater of pure HMW mannan polysaccharide fiber, which is white to off-white in appearance, odorless, tasteless and soluble in water. The purified HMW mannan polysaccharide fiber powder may then be packaged, illustrated as step 388, and used for the manufacturing of dietary supplement in a pharmaceutical dosage form or medicament such as, but not limited to, a chewable tablet, Caplets, Gel-caps, Succulents, and/or a concentrated liquid-gel format.

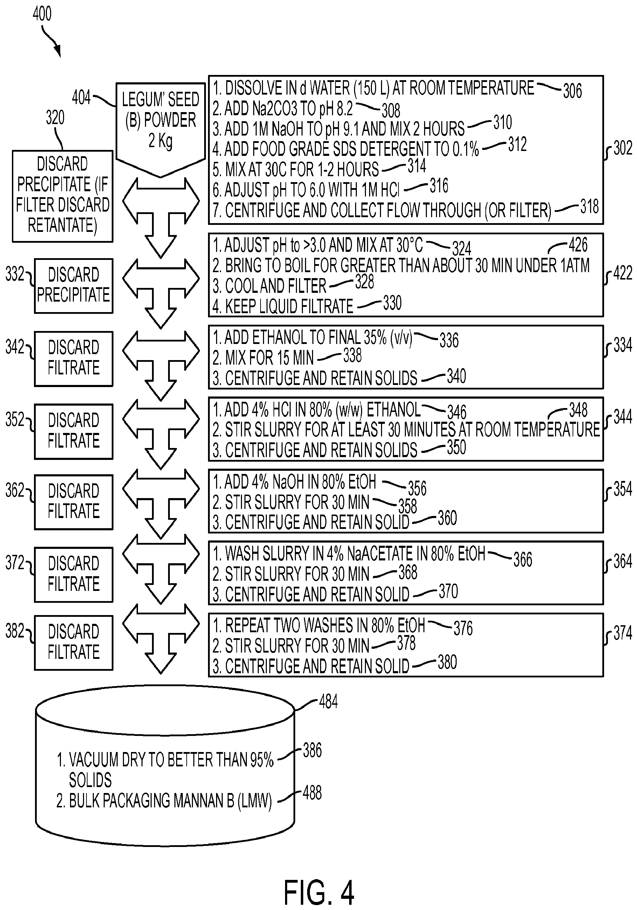

A process or method 400 for recovering one or more low molecular weight (LMW) purified mannan polysaccharide fibers according to an illustrative embodiment is disclosed with reference to Fig. 4. In this illustrative embodiment, the process 400 is similar to the process 300 described above with reference to Fig. 3. The differences between the process 400 and the process 300 are described below. According to the process 400, legume seed powder 404 is *Trigonelle foenum-graecum.* The process 400 includes a second phase 422, wherein the acidified mixture is heated and boiled for greater than about 30 minutes at about 1 atm, illustrated as step 426, to solubilize minerals and to achieve at least partial hydrolysis of proteins and starch like polysaccharides. The purified mannan polysaccharide fiber(s) recovered or extracted from the legume seed powder, in accordance with the process 400, is of a low molecular weight.

In this illustrative embodiment, the powder collected contains about 90% (wt/wt) or greater of pure LMW mannan polysaccharide fiber, which is white to off-white in appearance, odorless, tasteless and soluble in water. The process 400 also includes an eighth phase 484, wherein the purified LMW mannan polysaccharide fiber powder may be packaged, illustrated as step 488, and used for the manufacturing of dietary supplement in a pharmaceutical dosage form or medicament such as, but not limited to, a chewable tablet, Caplets, Gel-caps, Succulents, and/or a concentrated liquid-gel format.

While, the extraction processes described above are presented as a sequential batch process, it should be appreciated that a continuous mode such as a counter-current extraction mode of two or more stages, as is a common practice in the industry, may be used. It should also be appreciated that the use of various sources of legume seeds or flour as the raw material to be extracted may need adjustment in the temperature and/or time of contact to obtain the desired molecular weight. Additionally, in order to achieve allergenic free and toxin free mannan polysaccharide fiber further solvent washes may be required.

### Compositions

In an illustrative embodiment, the purified mannan polysaccharide(s) or fiber(s) is incorporated into a soluble supplement composition that can deliver oral therapeutically effective doses of mannan polysaccharide fiber. In an illustrative embodiment, the composition includes at least one purified soluble mannan polysaccharide of high molecular weight. In an illustrative embodiment, the high molecular weight mannan polysaccharide is about 50 to about 300 kD. In an illustrative embodiment, the composition includes at least one purified mannan polysaccharide of low molecular weight. In an illustrative embodiment, the low molecular weight mannan polysaccharide is about 5 to about 50 kD.

In an illustrative embodiment, the composition includes at least one purified soluble mannan polysaccharide of high molecular weight and at least one purified mannan polysaccharide of low molecular weight. In an illustrative embodiment, the composition includes at least one purified soluble mannan polysaccharide of high molecular weight, at least one purified mannan polysaccharide of low molecular weight, and at least one oligosaccharide, monosaccharide, and/or sugar alcohol.

The one or more oligosaccharides, monosaccharides, and/or sugar alcohols may include, but are not limited to, Mannitol, Erythritol, Sorbitol, Inositol, Raffinose (a nonreducing trisaccharide), Galactinol (dulcitol), Stachyose, Verbascose, Manninotriose, and higher homologs. In an illustrative embodiment, the composition includes about 1 gram of the at least one purified soluble mannan polysaccharide of high molecular weight, about 2 grams of the at least one purified mannan polysaccharide of low molecular weight, and about 1 gram of the sugar alcohol.

In an illustrative embodiment, the composition includes about 1% to about 50% (wt/wt) or about 1% to about 25% (wt/wt) of a purified soluble mannan polysaccharide of high molecular weight. In an illustrative embodiment, the composition includes about 20% to about 80% (wt/wt) of a purified soluble mannan polysaccharide of low molecular weight. In an illustrative embodiment, the composition includes about 40% to about 60% (wt/wt) of an oligosaccharides and/or monosaccharide. In an illustrative embodiment, the purified soluble mannan polysaccharide of high molecular weight has a high viscosity. In an illustrative embodiment, the purified soluble mannan polysaccharide of low molecular weight has a high solubility.

The ratio of low molecular weight mannan to high molecular weight mannan is 20 to 1 (wt/wt), and up to 100 to 1 (wt/wt), inclusive of all ranges and sub-ranges in between. In an illustrative embodiment, the compositions described above may optionally include one or more additional additives. In an illustrative embodiment, an additional additive may include one or more sugar alcohols, including, but not limited to, Sorbitol, Erithritol, Inositol, and other sugar alcohols of the type. A non-limiting list of other potential additional additives includes vitamins and minerals at their recommended % daily value requirements (for example, see www.USDA.gov).

In an illustrative embodiment, the compositions described above may optionally include or be combined with one or more diabetes medications or drugs, including, but not limited to, pioglitazone (for example Actos), glimepiride (for example Amaryl), rosiglitazone (for example Avandia), exenatide (for example Byetta), glyburide (for example DiaBeta), metformin (for example Glucophage), glyburide and metformin (for example Glucovance), glyburide (for example Glynase), miglitol (for example Glyset), insulin lispro (for example Humalog), Insulin Isophane, sitagliptin (for example Januvia), insulin glargine (for example Lantus), insulin aspart (for example NovoLog), saxagliptin (for example Onglyza), repaglinide (for example Prandin), acarbose (for example Precose), nateglinide (for example Starlix), liraglutide (for example Victoza), and other diabetes medications of the type.

In an illustrative embodiment, a composition in the form of a chewable tablet containing purified mannan polysaccharide fiber is produced. A MultiDirectional Motions mixer is used for to produce the chewable tablet. The MultiDirectional Motions mixer is run at about 5 to about 20 revolutions per minute (RPM). In an illustrative embodiment, the mixer has a mixing barrel supported by two crossing shafts, connected by Y-type universal joints, so that the mixing barrel combines turning, rocking and rolling motions to thoroughly and quickly mix the contents while avoiding gravity stratification of materials. The mixing barrel is a polished stainless-steel barrel type with no dead corners. The unique driven shaft servo mechanism ensures smooth and reliable operation with low vibration and noise. Mixing evenness exceeds 99.5%, and the charge coefficient achieves about 85%, better than traditional rotary mixers. The principal important components are the powerful drive system, digital control system, and good manufacturing practice (GMP) compliant mixing barrel.

In an illustrative embodiment, the temperature for the mixing is in the range of about 15 to about 35 degrees Celsius, which may be constant. In this illustrative embodiment, the temperature for the mixing is room temperature of about 23 degrees Celsius. The mixing period may be in the range of about 30 minutes to about 240 minutes. The contact period may be about 30 minutes.

In an illustrative embodiment, a sequential mixing protocol is disclosed where HMW mannan polysaccharide fibers are coated with or embedded in LMW mannan polysaccharide fibers by using a high performance V type multidirectional motion mixer or similar efficient agitator that mixes powder to evenness exceeding about 99.5%. The HMW individual mannan polysaccharide fiber is coated by molecular interaction with the LMW mannan polysaccharide fiber and the mixture or combined mannan polysaccharide fiber(s) is then embedded in one or more oligosaccharides and/or monosaccharides that also provide a sweet flavor. The composition when compacted into a chewable tablet is hard enough for automatic packaging and general handling, however, upon consumption and contact with water, saliva, or other fluid the tablet easily disintegrates and is dissolved in less than about 1 minute, to provide a palatable dietary supplement and reduce the glycemic index in foods, such as high carbohydrate foods. The tablet may also easily disintegrate and dissolve within about 1 minute to about 30 minutes.

In an illustrative embodiment, the compositions disclosed herein may be coated to provide for a time controlled dissolution of the functional high and/or low molecular weight mannan polysaccharide fibers for improving solubility and palatability with improved dietary performance in the oral and gastro-intestinal system opposed to the spiked profiles of immediate release formulations. In an illustrative embodiment, the compositions may be coated with one or more substances including, but not limited to, Hydroxy Propyl Methyl Cellulose (HPMC), Methyl Hydroxy Ethyl Cellulose (MHEC), Ethyl Cellulose (EC), Hydroxy Propyl Cellulose (HPC), Povidon, Sodium carboxy methyl cellulose, Polyethylene glycols (PEG), Acrylate polymers, Aqua-Zein®, which is an aqueous zein formulation containing no alcohol, Amylose starch and starch derivatives, and for enteric coating: Cellulose acetate phthalate (CAP), Acrylate polymers, Hydroxy propyl methyl cellulose phthalate, Polyvinyl acetate phthalate and other coatings known in the art.

In an illustrative embodiment, the compositions disclosed herein are useful in providing or producing a single high dosage dietary supplement and/or medicament important to achieving overall health benefits. For example, a high mannan dosage is effective in supporting glycemic health, and maintaining normal blood sugar levels as well as lowering of cholesterol in blood. The high mannan dosage is a pro-biotic nutrient that supports the growth of beneficial bacteria and the maintenance of beneficial intestinal flora for colonic and intestinal health. The high mannan dosage also is effective in promoting a healthy digestive system and the absorption of essential nutrients. The compositions disclosed herein are useful in veterinary and/or human medicine. The compositions may be administered orally to a patient or subject. The patient or subject may be a mammal, including non-human mammals. The compositions disclosed herein may be administered orally, as a chewable tablet, caplets, gel-caps, a pill, a dietary liquid-gel service unit, a succulent, and/or other types of administration of the type.

It is to be understood that the examples that follow are provided for explanatory purposes and are not to be construed as limiting, and that numerous variations and modifications will be evident to those skilled in the art and may be made without departing from the spirit and scope of the disclosure.

### Example 1

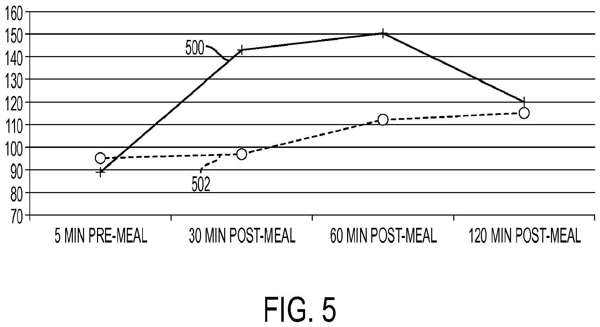

In an illustrative example, a subject suspected of pre-diabetic condition was given a meal containing about 400 kcal of combination of starch and sugar. The subject's blood glucose was monitored over a 2 hour period post meal. A graph of the subject's blood glucose levels according to an illustrative embodiment is described with reference to Fig. 5. As illustrated in Fig. 5, the first data points 500 are for non-treatment condition, while the second data points 502 are for the treatment condition. In this illustrative embodiment, the subject consumed about 6 grams of a mixture of purified mannan polysaccharide fibers prior to the meal. The results of a comparison between the first data points 500 and the second data points 502 clearly illustrate lower glucose levels over the 2 hours of testing indicating a drop in glycemic index. Thus, the consumption of about 6 grams of a mixture of purified mannan polysaccharide fibers results in lower glucose levels.

### Example 2

In a further illustrative example, a study comparing the short-term postprandial blood glucose and insulin responses produced by two test meals containing purified mannan polysaccharide fibers, compared to the effects produced by an equal-carbohydrate portion of a control meal of plain white rice was performed. The study used a repeated-measures design, such that every subject consumed each meal on two separate occasions, completing a total of six separate test sessions. Each subject completed their test sessions on separate weekday mornings at a similar time of day, as close as possible to the time they would normally eat breakfast.

### Subjects

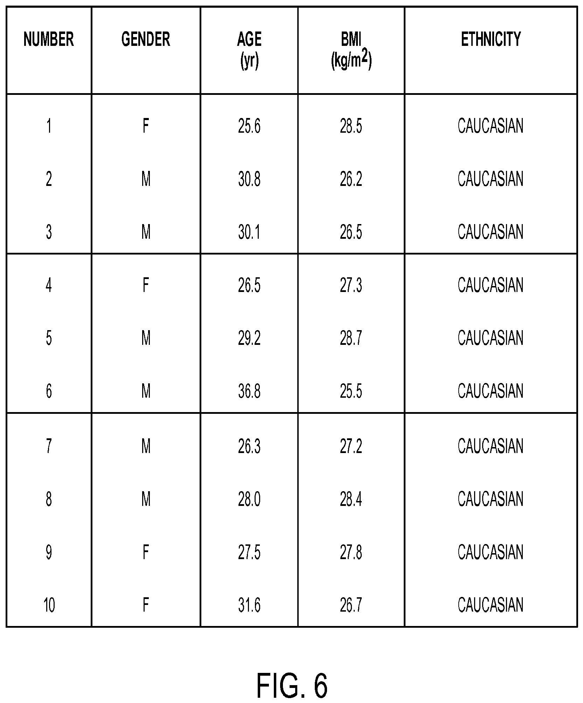

The subjects' relevant details including gender, age, body mass index (BMI), and ethnicity are listed in Fig. 6. As illustrated in Fig. 6. The subjects included ten healthy, non-smoking, overweight or obese subjects (4 females, 6 males). The mean ± SD age of the subjects was 29.2 ± 3.3 yr (range: 25.6 - 36.8 yr), and their mean ± SD body mass index value was 27.3 ± 1.1 kg/m² (range: 25.5 - 28.7 kg/m²).

All of the subjects met the following criteria: are aged between 25-65 years; non-smokers; have a stable body weight within the overweight weight range for their height (BMI values greater than 25 kg/m²); have normal dietary habits and are and have not been dieting or eating in an overly restrictive fashion within the past 3 months; have a regular pattern of low to moderate physical activity; are able to fast for greater than or equal to 10 hours the night before each test session; are able to refrain from eating a legume-based evening meal or drinking alcohol the day before each test session; find the test foods suitable for consumption within 12 minutes; are covered by social security or a similar system; are not taking any treatment for anorexia, weight loss, or any form of treatment or medication likely to interfere with metabolism or dietary habits; signed the informed consent form for the study; do not have any clinically significant physical or mental illness; are not suffering from a food allergy or serious food intolerance; are not regularly taking prescription medication other than standard contraceptive medication; are not females who are currently pregnant, breast-feeding, trying to become pregnant or using an acceptable contraceptive; are not participating in another clinical trial or participated in another clinical trial within the last week; are not undergoing general anesthesia in the month prior to inclusion; are not in a situation, which in the investigator's opinion could interfere with optimal participation in the present study or could constitute a special risk for the subject.

### Test Foods

Each rice-based test meal was served to a subject in a fixed portion containing 50 grams of available carbohydrate. All three test meals consisted of the same portion of cooked Jasmine rice (for example, Sun Rice® Jasmine Fragrant Rice, Ricegrowers Limited, NSW, Australia) served with 250 mL of plain water. Two of the test meals also included the consumption of either three (3) or six (6) purified mannan polysaccharide fiber tablets with 250 mL plain water 10 minutes prior to the consumption of the rice-based meal. A glass of 250 mL of water was consumed 10 minutes prior to the consumption of the rice meal for the control meal ("RICE").

The composition of each of the purified mannan tablets according to the disclosure included about 2.0g of purified mannan polysaccharide and about 1.5g of Sorbitol. Therefore, the test meal in which three purified mannan tablets were consumed ("RICE + 3") included about 6.0g of purified mannan polysaccharide and about 4.5g of Sorbitol. The test meal in which six purified mannan tablets were consumed ("RICE + 6") included about 12.0g of purified mannan polysaccharide and about 9g of Sorbitol.

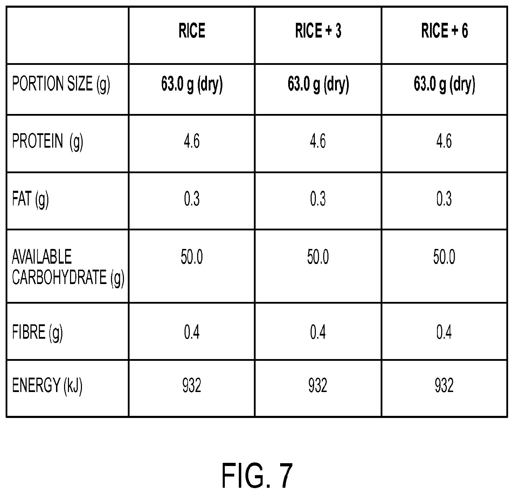

The macronutrient contents of the equal-carbohydrate portions of the three test meals (RICE, RICE + 3, and RICE + 6) are illustrated in Figure 7, calculated using the manufacturer's data. As illustrated in Fig. 7, all three meals included a portion size of about 63g of dry rice including about 4.6g of protein, about 0.3g of fat, about 50g of available carbohydrate, about 0.4g of fibre, and about 932 kJ of energy.

### Administration of Test Foods

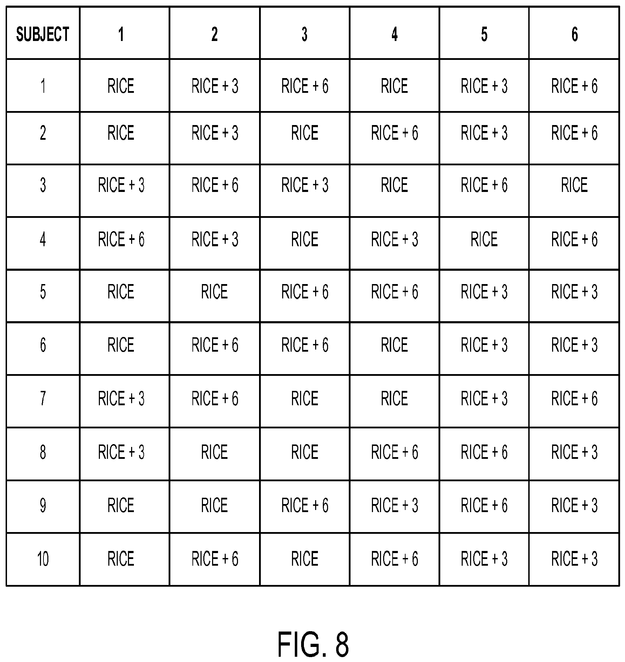

The three rice test meals (RICE, RICE + 3, and RICE + 6) were each consumed by the 10 subjects on two separate occasions. Therefore, each subject completed six separate test sessions. Each of the six test meals was presented to the subjects in a random order according to the list illustrated in Fig. 8. Ten minutes prior to the consumption of the rice test meal, the subjects were required to consume either 250 mL of water (control RICE meal), 3 purified mannan tablets according to the disclosure with 250 mL water (RICE + 3 meal) or 6 purified mannan tablets according to the disclosure with 250 mL water (RICE + 6). The test meals were all served to the subjects on standard white china plates without any commercial packaging. Therefore, the subjects can be considered to have been blind to the exact identity of rice or purified mannan tablets included in the test meals.

Each rice portion was prepared shortly before consumption according to the manufacturer's instructions. A test portion of dry rice was individually cooked on the stovetop using a gentle boil method in excess water. The rice portion was stirred occasionally during the cooking process, before being drained and served to a subject in a white china bowl. Each rice portion was served together with 250 mL of plain water. As soon as the subjects commenced eating, a stopwatch was started to time the progress of the two-hour experimental session. The subjects were instructed to consume all of the food and fluid served to them at a comfortable pace within 12 minutes.

### Experimental Protocol

The day before each test session, the subjects were required to refrain from drinking alcohol for the entire day and to avoid unusual levels of food intake and physical activity. In the evening, they were required to eat an evening meal based on a low-fat, carbohydrate-rich food, other than legumes, after which the subjects were required to fast for at least 10 hours overnight until the start of their test session the next morning. During the fasting period, they were allowed to drink only water.

The next morning the subjects reported to the research centre in a fasting condition. The researchers first checked that each subject was feeling well and had not taken any medication since the previous test session, and had been able to comply with all of the preceding experimental requirements. Each subject's body weight was then recorded (subjects clothed but without jackets and shoes), after which they warmed a hand in a bucket of hot water for 1-2 minutes. The first of two fasting finger-prick blood samples (-10 min) was then obtained from a fingertip (≥ 0.7 mL of capillary blood - depending on blood flow and haematocrit level) using a sterile automatic lancet device (for example, Safe-T-Pro®, Boehringer Mannheim, Germany). The subject was then given either rice with 250 mL of water (control RICE meal), rice with 3 purified mannan tablets and 250 mL water (RICE + 3 meal), or rice with 6 purified mannan tablets and 250 mL water. They were required to consume this test portion within 5 minutes. After 10 minutes, the subjects reheated their hand in hot water for another minute, after which another fasting blood sample was taken (0 min).

After this fasting blood sample was obtained, the subjects were seated at a large table in a quiet room and they were served a fixed portion of white rice, which they consumed together with 250 mL of water at a comfortable pace within 12 minutes. A stopwatch was started for each subject as soon as they began eating (0 min). The subjects were instructed to consume all of the water and food served to them, after which they were required to remain seated at the research centre and refrain from additional eating and drinking for the next two hours. Additional finger-prick blood samples were collected 15, 30, 45, 60, 90 and 120 minutes after eating had commenced. The subjects reheated their hands for 1-2 minutes in hot water before each blood sample was required. Therefore, a total of eight blood samples were collected from each subject during a test session. After completing the 120-minute test session, the subjects were free to consume some refreshments before leaving the research centre.

### Determination of Plasma Glucose and Insulin Concentrations

Each blood sample was collected into a 1.5-mL plastic micro-centrifuge tube containing 10 international units (IU) of an anticoagulant, heparin sodium salt (for example, Grade II, Sigma Chemical Company, Castle Hill, NSW, Australia). Immediately after collection, the blood sample was mixed with the anticoagulant by gently inverting the tube, and centrifuged at 12,500 x g for 0.5 - 1.0 minute at room temperature. The plasma was then immediately transferred into a labeled, uncoated plastic micro-centrifuge tube and then stored at - 20 °C until analyzed.

### Measurement of Plasma Glucose Concentrations

The plasma glucose concentrations were measured in duplicate using a Roche/Hitachi 912® automatic spectrophotometric centrifugal analyzer (for example, Boehringer Mannheim Gmbh, Mannheim, Germany) employing the glucose hexokinase / glucose-6-phosphate dehydrogenase enzymatic assay (for example, Boehringer Mannheim Australia, Castle Hill, NSW, Australia). All of the eight blood samples for an individual subject's test session were analyzed within the same assay run. Each run was performed with standard calibrators and internal controls (for example, CFAS, Precinorm S, and Precinorm U, Boehringer Mannheim, Australia). If the duplicate values for a blood sample differed by more than 0.3 mmol/L, the sample was reanalyzed another 2 times, and the 2-3 most similar concentrations were used to calculate an average plasma glucose concentration for that sample.

### Measurement of Plasma Insulin Concentrations

The plasma insulin concentrations were measured using a solid phase antibody-coated tube radioimmunoassay kit (for example, Diagnostic Products Corporation, Los Angeles, CA, USA). All of the blood samples collected from each individual subject throughout the entire study were analyzed within the same assay run using internal controls. The final insulin concentration of each plasma sample was calculated by converting the radioactive counts observed, using a calibration curve created by standards of known insulin concentrations. Two sets of standards were used in each assay run.

### Data Analysis

The average value of the two duplicate plasma glucose concentrations recorded for each blood sample was used as subjects' blood glucose concentrations for the eight time points of each two-hour test session. For each subject, the incremental area under the two-hour plasma glucose response curve (iAUC) for each test meal was calculated using the trapezoidal rule with the baseline, fasting value truncated at zero. The baseline value was the average concentration of the two fasting blood samples (-10 and 0 minutes). Any negative area below the fasting level was ignored. The iAUC values allow the comparison of the integrated effects of the test meals over a fixed time period. The incremental area under the plasma insulin response curve for each subject's test meals was calculated using the same method listed above for the plasma glucose iAUC.

The raw plasma glucose and plasma insulin results were typed into a spreadsheet (for example, Microsoft® Excel 2004 software, Microsoft Corporation) as they were obtained during the course of the study. Once data entry was completed, the incremental areas under the curve for the plasma glucose and insulin responses were calculated. The data in the spreadsheets were then transferred to another computer program file (for example, Statview® software, version 4.02, 1993, Abacus concepts Inc, Berkley, CA, USA), in order to calculate descriptive statistics for the glucose and insulin iAUC responses (including the mean, median, standard deviation (SD), and standard error of the mean (SEM)).

Repeated-measures analysis of variance (ANOVA) was used to determine whether there were any significant differences amongst the mean glucose and insulin iAUC responses of the three rice test meals. If a statistically significant product-effect was found, a post-hoc multiple comparisons test was performed in order to identify the specific significant differences. For normally distributed data, the Fisher PLSD test was used as the post-hoc test.

### RESULTS

No serious adverse effects were reported or observed during the study and none of the subjects reported taking any medication other than the purified mannan tablets. Each two-hour experimental session proceeded without incident. Similarly, none of the subjects prematurely departed the study. Two subjects reported minor gastrointestinal discomfort following a 2-hour experimental session containing the highest (6 tablets) dose of purified mannan tablets. These subjects reported mild stomach pain and/or diarrhea on the afternoon of the test session containing the 6 tablet dosage of purified mannan. All ten subjects reported that the larger dose of purified mannan tablets was difficult to consume due to the taste and size of the tablets.

### Plasma Glucose Responses

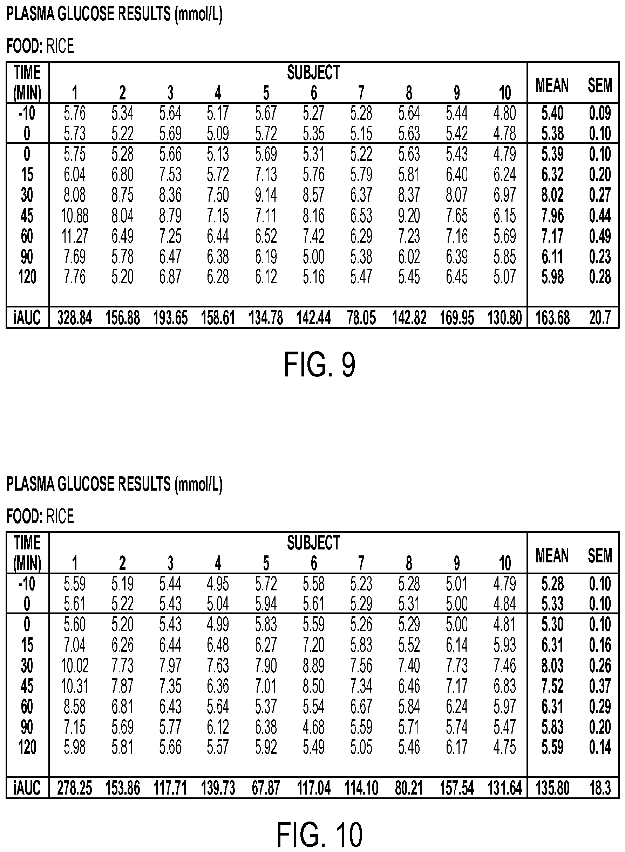

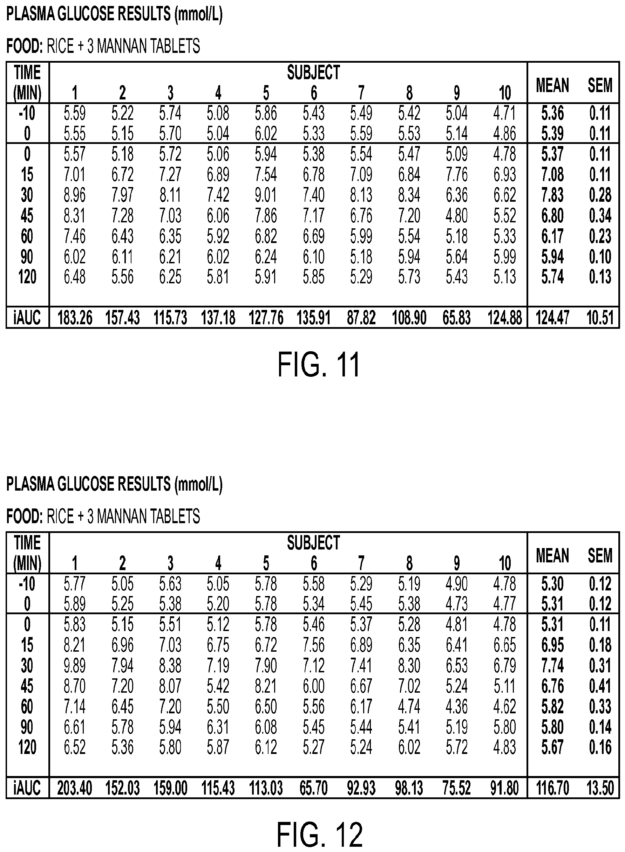

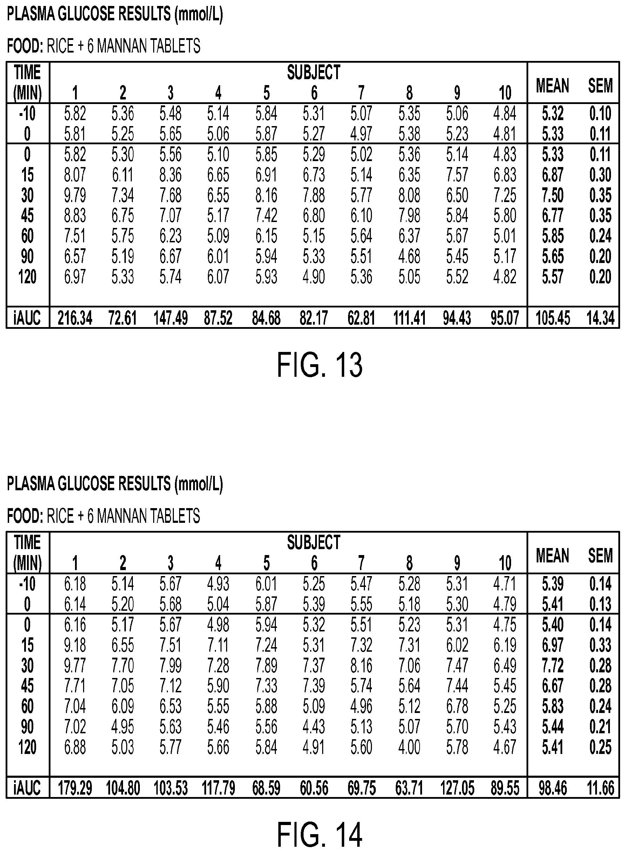

The 10 subjects' individual blood glucose concentrations for each test meal and their corresponding plasma glucose iAUC values are illustrated in Figs 9-14. Figs. 9 and 10 illustrate the subjects' individual blood glucose concentrations for the RICE meals. Figs. 11 and 12 illustrate the subjects' individual blood glucose concentrations for the RICE + 3 meals. Figs. 13 and 14 illustrate the subjects' individual blood glucose concentrations for the RICE + 6 meals.

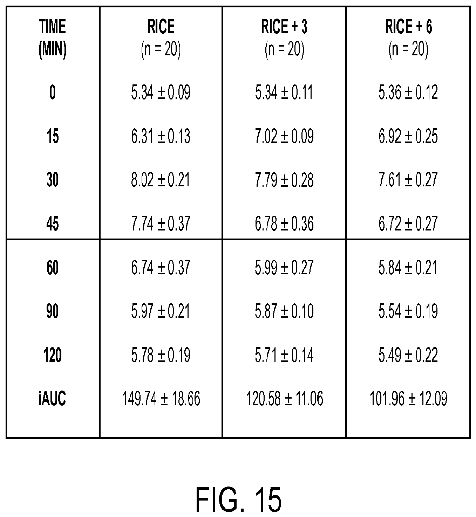

The control meal (RICE) produced the highest peak plasma glucose concentration at 30 minutes and the greatest overall glycemic response, referring to the glucose iAUC values illustrated in Fig. 15. Fig. 15 illustrates the mean ± SEM absolute plasma glucose concentrations for the eight blood samples (mmol/L) collected during the two-hour test sessions for the three test meals (repeated twice) and the mean incremental areas under the foods' two-hour plasma glucose response curves (iAUC). The results listed at 0 minutes are the mean values of two fasting blood samples (-10 and 0 min).

The overall glycemic response produced by the two test meals containing Rice and purified mannan tablets was similar throughout the 120-minute experimental period. Both of the RICE + 3 and RICE + 6 test meals produced a steady rise in plasma glucose to a moderate peak response at 30 minutes, followed by a gradual decline in glucose response between 30 - 120 minutes. The RICE + 6 meal produced a smaller plasma glucose concentration at each timepoint throughout the 120-minute experimental period, resulting in a lower overall glycemic response compared to the RICE + 3 meal.

### Plasma Insulin Responses

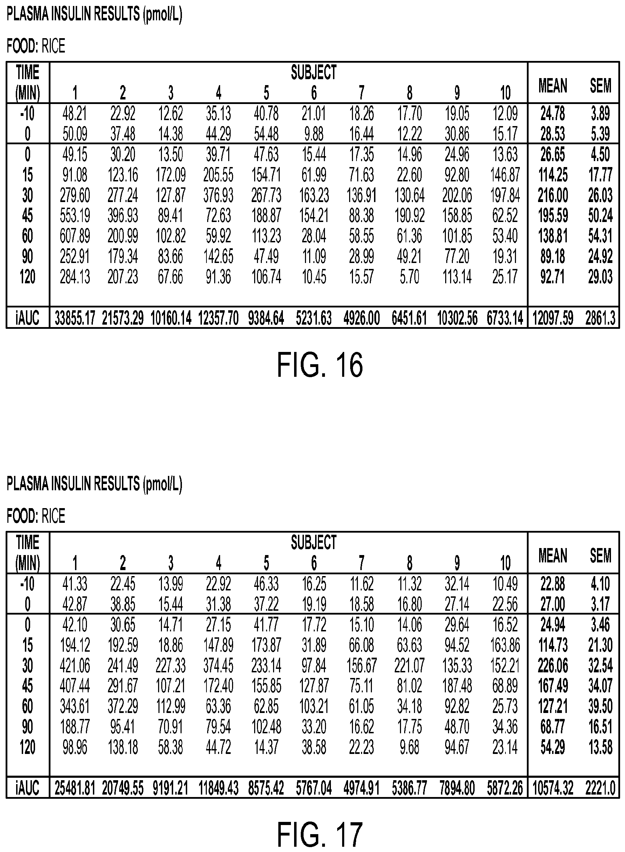

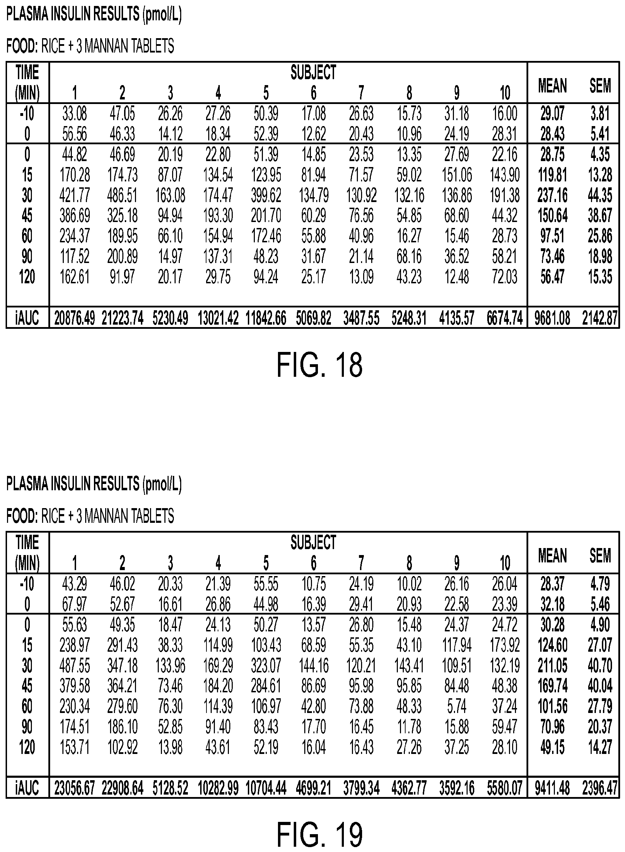

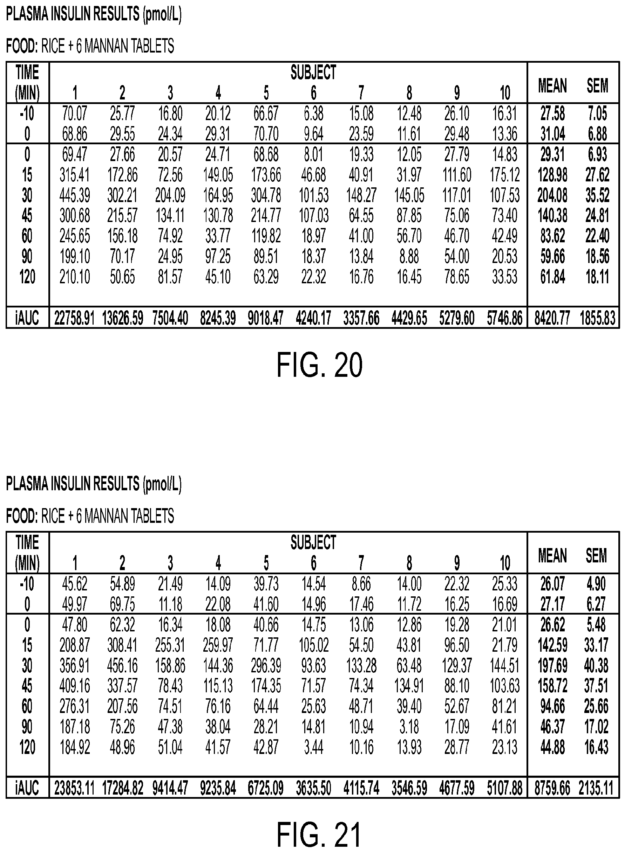

The 10 subjects' individual plasma insulin responses and insulin iAUC values for the test meals are illustrated in Figs 16-21. Figs. 16 and 17 illustrate the subjects' individual plasma insulin concentrations for the RICE meals. Figs. 18 and 19 illustrate the subjects' individual plasma insulin concentrations for the RICE + 3 meals. Figs. 20 and 21 illustrate the subjects' individual plasma insulin concentrations for the RICE + 6 meals.

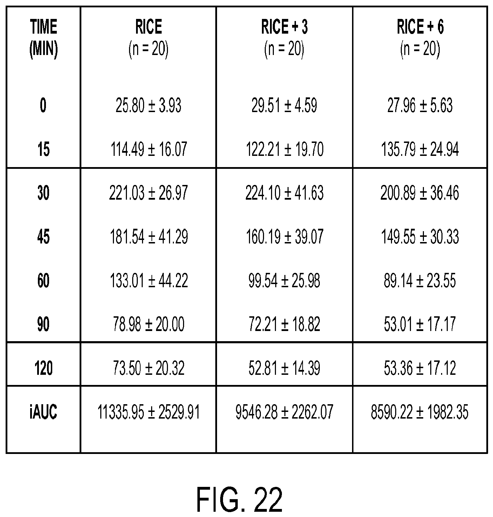

The average plasma insulin concentrations for the three rice meals are illustrated in Fig. 22. Fig. 22 illustrates the mean ± SEM absolute plasma insulin concentrations for the eight blood samples (pmol/L) collected during the two-hour test sessions for the test meals and the mean incremental areas under the two-hour plasma insulin response curves (iAUC). The results listed at 0 minutes are the mean values of two fasting blood samples (-10 and 0 min).

As expected due to its high glycemic response, the control food (RICE) produced a large rise in plasma insulin concentration and the largest overall plasma insulin response, referring to the insulin iAUC values illustrated in Fig. 22. The insulinemic responses produced by the two RICE + 3 and RICE + 6 test meals was similar throughout the experimental period. The two meals both produced a steady rise in plasma insulin concentration to a peak response at 30 minutes followed by a gradual decline in insulin concentration between 30 -120 minutes. Similar, to the corresponding glycemic response, the RICE + 6 meal produced a lower peak and overall insulin response compared to the RICE + 3 meal. The average plasma insulin levels for all three rice meals remained above the fasting baseline level at the completion of the 120-minute experimental period.

### The Average iA UC Responses

The postprandial glucose and insulin iAUC responses varied among the subjects that participated in the study. This variation between different peoples' responses to the same food is normal and is due to a number of factors, including different rates at which the subjects ingested the food, differences in the nutrient content of the individual test food portions, differences in the subjects' carbohydrate metabolism, and lifestyle and genetic factors.

Parametric statistical tests (for example, repeated-measures ANOVA and the Fisher PLSD test) were used to determine whether there were any significant differences among the plasma glucose and insulin iAUC responses for the rice test meals.

The one-factor repeated-measures ANOVA of the rice meals' average plasma glucose iAUC responses indicated that a significant difference existed amongst the mean iAUC values (p = 0.0001). The results of the post-hoc test (for example, the Fisher PLSD test) showed that the mean iAUC response for the control meal (RICE) was significantly greater than the mean glucose responses for the RICE + 3 tablets (p<0.01) and the RICE + 6 tablets (p < 0.001). The mean plasma glucose iAUC response for the RICE + 3 tablets meal was also found to be significantly higher than the mean glucose response for the RICE + 6 tablets (p<0.05).

The one-factor repeated-measures ANOVA of the rice meals' average plasma insulin responses indicated that a significant difference existed amongst the mean iAUC responses (p = 0.0009). The mean plasma insulin iAUC response of the RICE meal was significantly greater than the mean insulin responses of the RICE + 3 tablets meal (p<0.05) and the RICE + 6 tablets meal (p<0.001). No significant difference was detected between the mean plasma insulin responses of the two test meals containing the purified mannan tablets.

### Relationship Between the Test Foods' Glucose and Insulin iA UC Responses

Linear regression analysis was used to determine the degree to which the individual subjects' plasma glucose and insulin responses for the test meals were associated. In general, the rice test meals' glucose responses were significantly associated with their corresponding insulin responses (r = 0.78, n = 60, p = 0.0001).

### Conclusion

This study shows that the consumption of tablets having a composition including purified mannan polysaccharide fiber according to the disclosure prior to a high carbohydrate food significantly reduces the postprandial glucose and insulin responses to that meal. The lower dose of purified mannan, the 3 tablets containing 6g mannan polysaccharide and 4.5g Sorbitol, resulted in a 19% reduction in postprandial glucose and 16% decrease in postprandial insulin response compared to the white rice consumed alone. The higher dose of purified mannan, the 6 tablets containing 12g mannan polysaccharide and 9g Sorbitol, produced a 32% reduction in the 2-hr glucose response and a 24% reduction in the postprandial insulin response compared to the white rice control meal.

### Example 3

### Toxicity Testing

In an illustrative embodiment, the purification processes described above eliminate dioxins below 0.01 mg/kg, which is considered safe for human consumption. High levels of pentachlorophenol and dioxins have been found in certain batches of guar gum originating in or consigned from India, about 1000 times the level of what can be considered as normal background contamination. Such contamination constitutes a threat to public health if no measures are taken to avoid the presence of pentachlorophenol (PCP) and dioxins in guar gum. In an illustrative embodiment, testing demonstrates that the product or purified mannan polysaccharide fiber according to the disclosure does not contain more than 0.01 mg/kg pentachlorophenol (PCP). Similarly, the process is validated for microbial toxins and heavy metals to make the product safe for human and non-human consumption.

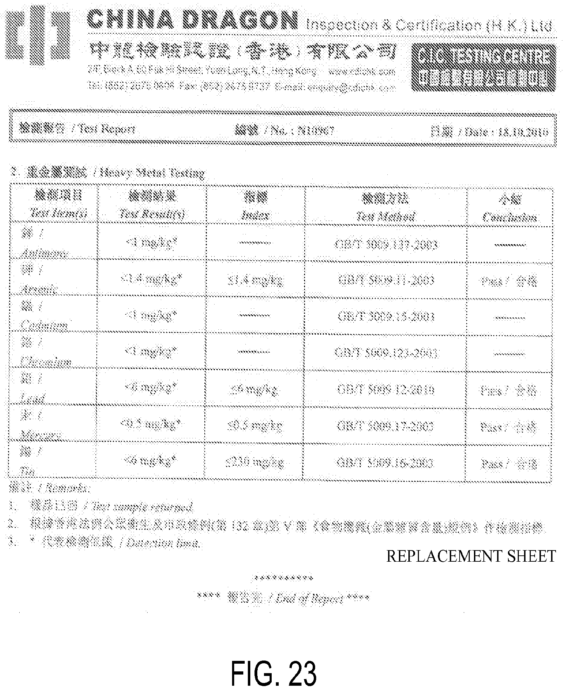

In an illustrative embodiment, the purified mannan polysaccharide fiber according to the disclosure was tested for heavy metals. As illustrated in Fig. 23, a chewable tablet containing about 2 grams of purified mannan polysaccharide fiber according to the disclosure was tested for antimony using a GB/T 5009.137-2003 test method. The results indicate that the chewable tablet contains less than about 1 mg/kg of antimony. The chewable tablet was tested for arsenic using a GB/T 5009.11-2003 test method. The results indicate that the chewable tablet contains less than about 1.4 mg/kg of arsenic. The chewable tablet was tested for cadmium using a GB/T 5009.15-2003 test method. The results indicate that the chewable tablet contains less than about 1 mg/kg of cadmium. The chewable tablet was tested for chromium using a GB/T 5009.123-2010 test method. The results indicate that the chewable tablet contains less than about 1 mg/kg of chromium. The chewable tablet was tested for lead using a GB/T 5009.12-2010 test method. The results indicate that the chewable tablet contains less than about 6 mg/kg of lead. The chewable tablet was tested for mercury using a GB/T 5009.17-2003 test method. The results indicate that the chewable tablet contains less than about 0.5 mg/kg of mercury. The chewable tablet was also tested for tin using a GB/T 5009.16-2003 test method. The results indicate that the chewable tablet contains less than about 6 mg/kg of tin.

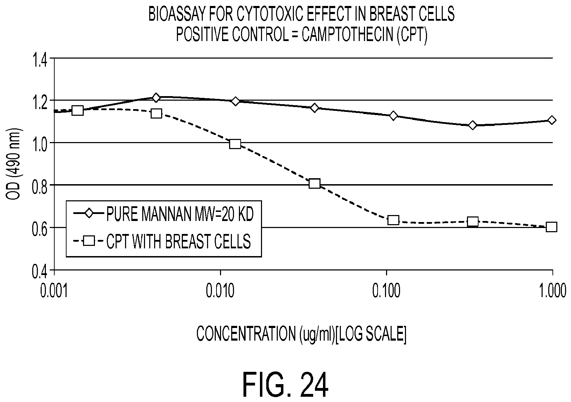

In an illustrative embodiment, the purified mannan polysaccharide fiber according to the disclosure was tested for cytotoxicity using, for example, a culture of breast tissue cells. The cytotoxicity bioassay procedure included re-suspending the cells in assay culture media containing about 0.25% Heat Inactivated Fetal Bovine Serum (HI-FBS) (for example, Gibco lot # 1297785) and 4X Penicillin Streptomycin (Pen/Strep). After re-suspending the cells, about 100 µL of the growing culture cells was transferred into each well of an assay plate (5,000 cells/well). Test samples were serially diluted in assay media without Pen/Strep in a test tube in duplicate. About 100 µl of serial diluted was added to the cells. The final volume of each well was about 200 µl, containing about 2x Pen/Strep. The cells were then incubated for about 137 hours. Following incubation, about 20 µl of Promega Substrate Cell Titer 96 Aqueous One Solution Reagent was added to each well. The samples were then incubated as about 37 degrees Celsius and the optical density (OD) at 490 nm was determined. The results were graphed and the ID50 (Inhibition concentration causing 50% growth reduction) was calculated. The results are illustrated in graphical form in Fig. 24. As illustrated in Fig. 24, the purified mannan polysaccharide has no cytotoxicity. Camptothecin (CPT) with breast tissue cells was used as a control.

In an illustrative embodiment, the purified mannan polysaccharide fiber according to the disclosure was tested for neurotoxicity. The neurotoxicity assays were conducted using glioma cell (for example, ATCC® CCL-107™) and neuroblastoma cell (for example, ATCC® HTB-11™). The cells that previously were stored at about -200 degrees Celsius were reconstituted and cultured in assay media (for example, 5% HI-FBS - Gibco lot # 1393129). The cells were resuspended in assay media free of cytokines containing 5% HI-FBS (for example, Gibco lot# 1393129) at 20,000 cells/100 µL. About 100 µL of the cells was transferred to each well of an Assay Plate (for example, a 96-well format). About 20 µL of Nerve Growth Factor solution was added to each well and incubated for about 20 hours at about 37 degrees Celsius. Nerve Growth Factor solution, for example Brain-derived neurotrophic factor (BDNF) in growth media contains 5% HI-FBS for optimum growth.

In a separate plate, a sample was serially diluted in duplicate in dilutions of 1:3 in assay media. About 100 µL was transferred to the cells in each well in the Assay Plate and incubated for about 24 hours at about 37 degrees Celsius. About 20µL of Promega' CellTiter 96® AQueous One Solution was added to each well and incubated at about 37 degrees Celsius. The results at OD 490nm were determined. Proliferation data was analyzed versus a negative and positive (10 ug/mL Methotrexate added) controls. The IC50 value was then determined by Probit regression analysis. The results indicated that the purified mannan polysaccharide fiber has no neurotoxicity. The purified mannan polysaccharide fiber has no IC50 value established at concentrations of over 5mg/mL, where as known neurotoxins and cytotoxins have an IC50 in the micro and nano grams/mL levels.

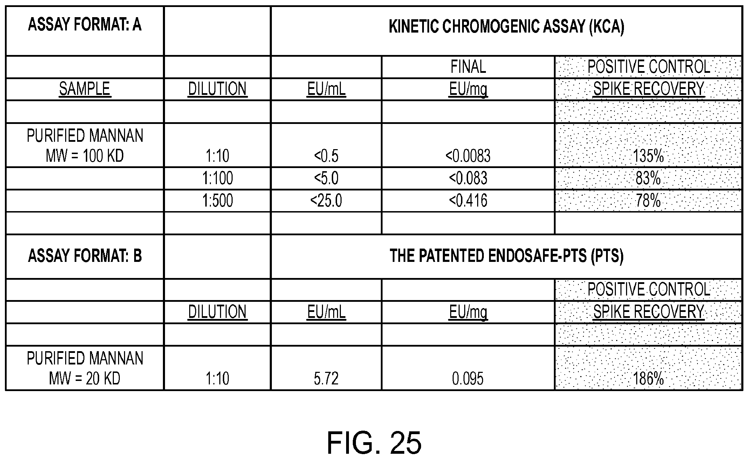

In an illustrative embodiment, the purified mannan polysaccharide fiber according to the disclosure was tested for microbial toxins. An assay for total Microbial toxins was conducted using Endosafe®-PTS (Charles River laboratories). Critical endotoxin test results are crucial for the confirmation of safe manufacture and necessary for release of safe therapeutic product. A handheld spectrophotometer that utilizes FDA-licensed disposable cartridges for accurate, convenient endotoxin testing was used. With test results in just 15 minutes, manufacturing and release can rapidly move forward without delay. The assay illustrated in Fig. 25 of purified mannan polysaccharide fiber indicates that total microbial endotoxins are below the limit of detection of the assay, for example less than 0.5 EU/mL, and less than 0.0083 EU/mg.

While the compositions, systems, processes, and methods disclosed herein have been described and illustrated in connection with certain embodiments, many variations and modifications will be evident to those skilled in the art and may be made without departing from the spirit and scope of the disclosure. The compositions, systems, processes, and methods disclosed herein are thus not to be limited to the precise details of methodology or construction set forth above as such variations and modification are intended to be included within the scope of the disclosure.

## Claims

1. A composition comprising:
at least one first purified soluble mannan polysaccharide of high molecular weight from 50 kD to 300 kD;
at least one second purified mannan polysaccharide of low molecular weight from 5 kD to 50 kD, wherein the at least one first purified soluble mannan polysaccharide of high molecular weight, and the at least one second purified mannan polysaccharide of low molecular weight are purified to contain less than 1% of natural non-polysaccharides impurities including proteins, alkaloids, glycoalkaloids and provide hypoallergenic dietary fibers; and
at least one sugar alcohol and one oligosaccharide or/and monosaccharide,
wherein the ratio of low molecular weight mannan to high molecular weight mannan polysaccharide is 20:1 to 100:1 by weight.

2. The composition according to claim 1, wherein at least one of the at least one first purified soluble mannan polysaccharide of high molecular weight and the at least one second purified mannan polysaccharide of low molecular weight is fractionated from one or more legume seeds, the one or more legume seeds including at least one of *Cassia fistula, Ceratonia siliqua, Caesalpinia spinose, Trigonella foenum-graecum,* and/or *Cyamopsis tetragonolobus.*

3. The composition according to claim 1, wherein the at least one first purified soluble mannan polysaccharide of high molecular weight and the at least one second purified mannan polysaccharide of low molecular weight are purified to remove at least a portion of environmental and agricultural contaminants including heavy metals, pesticides, herbicides, microbial toxins and mycotoxins.

4. The composition according to claim 1, wherein the at least one first purified soluble mannan polysaccharide of high molecular weight is embedded in the at least one second purified mannan polysaccharide of low molecular weight forming at least one combined mannan polysaccharide; and wherein the at least one combined mannan polysaccharide is embedded in the at least one oligosaccharide and/or monosaccharide.

5. The composition according to claim 4, wherein the composition is in the form of at least one of a chewable tablet, a caplet, a gel-cap, a succulent, and a concentrated liquid gel.

6. The composition according to claim 5, wherein the composition dissolves within 1 minute to 30 minutes upon contact with water, saliva, or other fluid.

7. The composition according to claim 5, wherein the composition contains:
1% to 25% (wt/wt) of the at least one first purified soluble mannan polysaccharide of high molecular weight;
20% to 80% (wt/wt) of the at least one second purified mannan polysaccharide of low molecular weight; and
40% to 60% (wt/wt) of the at least one oligosaccharide and/or monosaccharide.

8. The composition according to claim 1, wherein the composition includes:
1 gram of the first purified soluble mannan polysaccharide of a high molecular weight;
2.0 grams of the second purified soluble mannan polysaccharide of a low molecular weight; and
1 gram of the sugar alcohol.

## Patentansprüche

1. Zusammensetzung, umfassend:
wenigstens ein erstes gereinigtes lösliches Mannanpolysaccharid mit hohem Molekulargewicht von 50 kD bis 300 kD,
wenigstens ein zweites gereinigtes Mannanpolysaccharid mit niedrigem Molekulargewicht von 5 kD bis 50 kD, wobei das wenigstens eine erste gereinigte lösliche Mannanpolysaccharid mit hohem Molekulargewicht und das wenigstens eine zweite gereinigte Mannanpolysaccharid mit niedrigem Molekulargewicht so gereinigt sind, dass weniger als 1% natürliche Nicht-Polysaccharid-Verunreinigungen, einschließlich Proteine, Alkaloide, Glycoalkaloide, enthalten sind, und sie hypoallergene Ballaststoffe bereitstellen, und
wenigstens einen Zuckeralkohol und ein Oligosaccharid oder/und Monosaccharid,
wobei das Verhältnis von Mannanpolysaccharid mit niedrigem Molekulargewicht zu Mannanpolysaccharid mit hohem Molekulargewicht 20:1 bis 100:1, bezogen auf das Gewicht, beträgt.

2. Zusammensetzung gemäß Anspruch 1, wobei wenigstens eins des wenigstens einen ersten gereinigten löslichen Mannanpolysaccharids mit hohem Molekulargewicht und des wenigstens einen zweiten gereinigten Mannanpolysaccharids mit niedrigem Molekulargewicht aus einem oder mehreren Leguminosensamen fraktioniert ist, wobei der eine oder die mehreren Leguminosensamen wenigstens einen von *Cassia fistula, Ceratonia siliqua, Caesalpinia spinose, Trigonella foenum-graecum,* und/oder *Cyamopsis tetragonolobus* enthält.

3. Zusammensetzung gemäß Anspruch 1, wobei das wenigstens eine erste gereinigte lösliche Mannanpolysaccharid mit hohem Molekulargewicht und das wenigstens eine zweite gereinigte Mannanpolysaccharid mit niedrigem Molekulargewicht gereinigt werden, um wenigstens einen Teil von Umwelt- und Landwirtschaftskontaminanten, einschließlich Schwermetalle, Pestizide, Herbizide, mikrobielle Toxine und Mycotoxine, zu entfernen.

4. Zusammensetzung gemäß Anspruch 1, wobei das wenigstens eine erste gereinigte lösliche Mannanpolysaccharid mit hohem Molekulargewicht in das wenigstens eine zweite gereinigte Mannanpolysaccharid mit niedrigem Molekulargewicht eingebettet ist, wobei wenigstens ein kombiniertes Mannanpolysaccharid gebildet wird, und wobei das wenigstens eine kombinierte Mannanpolysaccharid in das wenigstens eine Oligosaccharid und/oder Monosaccharid eingebettet ist.

5. Zusammensetzung gemäß Anspruch 4, wobei die Zusammensetzung in Form mindestens einer kaubaren Tablette, eines Caplets, einer Gelkapsel, eines Sukkulenten und eines konzentrierten Flüssigkeitsgels vorliegt.

6. Zusammensetzung gemäß Anspruch 5, wobei sich die Zusammensetzung innerhalb einer Minute bis 30 Minuten nach Kontakt mit Wasser, Speichel oder einer anderen Flüssigkeit auflöst.

7. Zusammensetzung gemäß Anspruch 5, wobei die Zusammensetzung beinhaltet:
1% bis 25% (Gew./Gew.) des wenigstens einen ersten gereinigten löslichen Mannanpolysaccharids mit hohem Molekulargewicht,
20% bis 80% (Gew./Gew.) des wenigstens einen zweiten gereinigten Mannanpolysaccharids mit niedrigem Molekulargewicht, und
40% bis 60% (Gew./Gew.) des wenigstens einen Oligosaccharids und/oder Monosaccharids.

8. Zusammensetzung gemäß Anspruch 1, wobei die Zusammensetzung beinhaltet:
1 Gramm des ersten gereinigten löslichen Mannanpolysaccharids mit hohem Molekulargewicht,
2,0 Gramm des zweiten gereinigten löslichen Mannanpolysaccharids mit niedrigem Molekulargewicht, und
1 Gramm vom Zuckeralkohol.

## Revendications

1. Composition comprenant :
au moins un premier polysaccharide de mannane soluble purifié de masse moléculaire élevée allant de 50 kD à 300 kD ;
au moins un deuxième polysaccharide de mannane purifié de faible masse moléculaire allant de 5 kD à 50 kD, dans laquelle l'au moins un premier polysaccharide de mannane soluble purifié de masse moléculaire élevée et l'au moins un deuxième polysaccharide de mannane purifié de faible masse moléculaire sont purifiés pour contenir moins de 1 % d'impuretés naturelles non-polysaccharides incluant des protéines, des alcaloïdes, des glycoalcaloïdes et pour fournir des fibres diététiques hypoallergéniques ; et
au moins un alcool de sucre et un oligosaccharide ou/et monosaccharide,
dans laquelle le rapport du mannane à faible masse moléculaire au polysaccharide de mannane à masse moléculaire élevée va de 20:1 à 100:1 en poids.

2. Composition selon la revendication 1, dans laquelle au moins l'un de l'au moins un premier polysaccharide de mannane soluble purifié de masse moléculaire élevée et de l'au moins un deuxième polysaccharide de mannane purifié de faible masse moléculaire est fractionné à partir d'une ou plusieurs graines de légumineuses, la ou les graines de légumineuses incluant au moins l'un parmi *Cassia fistula, Ceratonia siliqua, Caesalpinia spinose, Trigonella foenun-graecum,* et/ou *Cyamopsis tetragonohbus.*

3. Composition selon la revendication 1, dans laquelle l'au moins un premier polysaccharide de mannane soluble purifié de masse moléculaire élevée et l'au moins un deuxième polysaccharide de mannane purifié de faible masse moléculaire sont purifiés pour éliminer au moins une partie de contaminants environnementaux et agricoles incluant des métaux lourds, des pesticides, des herbicides, des toxines et mycotoxines microbiennes.

4. Composition selon la revendication 1, dans laquelle l'au moins un premier polysaccharide de mannane soluble purifié de masse moléculaire élevée est intégré dans l'au moins un deuxième polysaccharide de mannane purifié de faible masse moléculaire formant au moins un polysaccharide de mannane combiné ; et dans laquelle l'au moins un polysaccharide de mannane combiné est intégré dans l'au moins un oligosaccharide et/ou monosaccharide.

5. Composition selon la revendication 4, dans laquelle la composition est sous la forme d'au moins l'un parmi un comprimé à mâcher, un comprimé, une capsule de gel, une plante succulente et un gel liquide concentré.

6. Composition selon la revendication 5, dans laquelle la composition se dissout endéans 1 minute à 30 minutes lors d'un contact avec de l'eau, de la salive ou un autre fluide.

7. Composition selon la revendication 5, dans laquelle la composition contient :
1 % à 25 % (poids/poids) de l'au moins un premier polysaccharide de mannane soluble purifié de masse moléculaire élevée ;
20 % à 80 % (poids/poids) de l'au moins un deuxième polysaccharide de mannane purifié de faible masse moléculaire ; et
40 % à 60 % (poids/poids) de l'au moins un oligosaccharide et/ou monosaccharide.

8. Composition selon la revendication 1, dans laquelle la composition inclut :
1 gramme du premier polysaccharide de mannane soluble purifié d'une masse moléculaire élevée ;
2,0 grammes du deuxième polysaccharide de mannane soluble purifié d'une faible masse moléculaire ; et
1 gramme de l'alcool de sucre.
